## Europäisches Patentamt
## European Patent Office
## Office européen des brevets

(19)

(11) Veröffentlichungsnummer: **0 171 701**
**B1**

(12)

# EUROPÄISCHE PATENTSCHRIFT

(45) Veröffentlichungstag der Patentschrift:
**19.04.89**

(51) Int. Cl.⁴: **B 23 K 7/02**

(21) Anmeldenummer: **85109551.3**

(22) Anmeldetag: **30.07.85**

(54) Brennschneidmaschine zum Schneiden von Werkstücken.

(30) Priorität: **08.08.84 DE 3429124**

(43) Veröffentlichungstag der Anmeldung:
**19.02.86 Patentblatt 86/8**

(45) Bekanntmachung des Hinweises auf die Patenterteilung:
**19.04.89 Patentblatt 89/16**

(84) Benannte Vertragsstaaten:
**AT BE CH FR GB IT LI NL SE**

(56) Entgegenhaltungen:
**AT-B-373 810**
**DE-A-2 747 772**
**DE-A-3 007 228**
**DE-B-2 151 395**
**DE-U-750 256**
**SU-A-755 466**
**US-A-3 351 332**
**US-A-3 779 533**

**Prospect Hancock, Brennscheid-Automatik GmbH,
nr. 200,0137804**

(73) Patentinhaber: **MESSER GRIESHEIM GMBH,
Hanauer Landstrasse 330, D-6000 Frankfurt/Main 1
(DE)**

(72) Erfinder: **Nicolai, Manfred, Dr., Wienerstrasse 60,
D-6100 Darmstadt (DE)**

EP 0 171 701 B1

## Beschreibung

Die Erfindung betrifft eine Brennschneidmaschine nach dem Oberbegriff des Anspruches 1.

Für die Bearbeitung insbesondere großer Werkstücktafeln werden Brennschneidmaschinen verwendet, die mit mehreren Schneidbrennern ausgerüstet sind. Jeder dieser Schneidbrenner ist jeweils an einem Brenneraggregat befestigt. Durch gleichzeitiges Schneiden mit mehreren numerisch gesteuerten Schneidbrennern wird die Wirtschaftlichkeit erheblich gesteigert.

Aus dem Prospekt Hankock, Brennschneid-Automatik GmbH, Nr. 200, 013 7804 sind Dreibrenneraggregate bekannt, die jeweils aus einem mittig angeordnetem Schneidbrenner mit zum Werkstück senkrechter Brennerachse und zwei unter einem Winkel zum Werkstück angeordneten Schneidbrennern bestehen. Die Schneidbrenner werden in Abhängigkeit von der herzustellenden Schweißfugengeometrie (I-, V-, K-, und K-Stoß) gleichzeitig in Einsatz gebracht, so daß eine erhöhte Verschmutzung der Schneidbrennerdüsen aufgrund ihrer räumlichen Nähe auftritt.

In der DE-A-2 747 772 und dem vorstehend genannten Prospekt sind weiterhin Formschneidevorrichtungen offenbart, bei denen mehrere Einzel-Schneidbrenner mit senkrechten Brennerachsen gleichzeitig in Einsatz gebracht werden. Mit diesen Vorrichtungen werden mehrere gleiche Formteile gleichzeitig aus einer Blechtafel ausgeschnitten.

Der Erfindung liegt die Aufgabe zugrunde, die Rüstzeit beim Schneiden beliebig dicker Werkstoffe sowie bei Düsenverschleiß in einfachster Art und Weise zu verringern, so daß fortlaufend Schnitte von unbegrenzter Länge bzw. Dauer durchgeführt werden können, ohne daß das Schneidwerkzeug ausgewechselt werden muß.

Dieses Problem wurde in der US-PS-3 779 533 dadurch gelöst, daß beim Schneiden unterschiedlich dicker Werkstücke nach der für einen ersten Werkstückdickenbereich ausgelegten Brennerdüse die für einen anderen Werkstückdickenbereich ausgelegte nächste Brennerdüse eingeschwenkt wird. Hierzu ist der Schneidbrenner als Revolverkopf mit mehreren unterschiedlichen Schneiddüsen ausgebildet.

Nachteilig bei dieser trommelförmigen Schneiddüsenanordnung ist der wesentlich größere Steuer- und Konstruktionsaufwand durch die drehbare Gasdurchführung (Abdichtung), wobei ebenfalls keine gleichbleibende (maßgenaue) Schnittkontur gewährleistet ist. Bei Drehdurchführungen sind toleranzarme und somit fertigungs- sowie kostenintensive Bauteile und Abdichtungen erforderlich, die im Brennschneidbetrieb einer laufenden Wartung bedürfen.

Es wurde nun eine Brennschneidmaschine zum Schneiden von Werkstücken, wie Blechtafeln, Metallplatten und dgl. mit mindestens einem Brenneraggregat zur Halterung von mehreren verstellbar angeordneten Einzel-Schneidbrennern mit zum Werkstück senkrechten Brennerachsen und einer Einrichtung zur Zuführung von Brenn-, Heiz- und/oder Schneidgasen gefunden, die gemäß der Erfindung gekennzeichnet ist durch einen automatisch von einer NC-Steuerung steuerbaren Wechsel der nacheinander für den Arbeitseinsatz benötigten und in festem Brennerabstand zueinander auf dem Brenneraggregat angeordneten Einzel-Schneidbrenner über eine Verschiebung des Brennerabstandes und ein Verstellen des einen, in den Arbeitseinsatz zu bringenden Einzel-Schneidbrenners auf eine Arbeitshöhe über dem Werkstück während die jeweils weiteren Einzel-Schneidbrenner des Brenneraggregates nicht in den Arbeitseinsatz gebracht werden können.

Vorteilhaft kann das Brenneraggregat mit mehreren Schneidbrennern zum Schneiden von Werkstücken mit gleichen und/oder mit unterschiedlichen Werkstückdickenbereichen ausgerüstet werden. Dabei wird der von einem als Autogen-Schneidbrenner ausgebildeten Schneidbrenner schneidbare Werkstückdickenbereich im wesentlichen durch die den Gasdurchsatz (Schneidsauerstoff) bestimmende Geometrie der Schneiddüse bestimmt und bei einem Plasmabrenner durch die Menge des Schneidgases und die zugeführte Energie.

Um ein solches Brenneraggregat in kleiner Baugröße und unter Verwendung bereits vorhandener Bauteile ausbilden zu können, werden die Schneidbrenner in Reihe oder auf einem Kreis nebeneinander angeordnet. Zur Vermeidung von individuellen Fehlern des Bedienungspersonals bei der Ermittlung und Konstanthaltung der Arbeitshöhe der Schneidbrenner und zur Automatisierung des Schweißprozesses ist jedem Schneidbrenner ein Sensor zugeordnet.

Um insbesondere einen schnellen und automatisch steuerbaren Wechsel des jeweils für den Arbeitseinsatz benötigten Schneidbrenners zu ermöglichen, ist jedem Schneidbrenner eine Zündeinrichtung zugeordnet. Um ein an der Brennschneidmaschine befestigtes erfindungsgemäßes Brenneraggregat über den vorgegebenen Arbeitsraum kollisionsfrei verfahren zu können, ist jeder Schneidbrenner an einer vertikal verfahrbaren Zweifach-Hubeinrichtung befestigt. Vorteilhafte Weiterbildungen der Erfindung sind in den Unteransprüchen angegeben.

Die mit der Erfindung erzielten Vorteile bestehen insbesondere in der Erhöhung der Wirtschaftlichkeit des Betriebseinsatzes von Brennschneidmaschinen. Durch die Anordnung mehrerer Schneidbrenner an einem Brenneraggregat wird auf besonders einfache Art und Weise eine Verringerung der Rüstzeiten und somit eine Erhöhung der Nutzungsdauer der Brennschneidmaschine bei gleichzeitiger maßgenauer Führung der Schneidbrenner ermöglicht. Hinzu kommt, daß bereits vorhandene Schneidbrenner und Schneidprogramme verwendet werden können. Eine aufwendige Wartung und Steuerung der Schneidbrenner entfällt. Insgesamt zeichnet sich die Brennschneidmaschine im Brennschneidbetrieb durch eine lange Schneiddauer bei geringstem Personaleinsatz aus.

Ein Ausführungsbeispiel der Erfindung ist in der Zeichnung dargestellt und wird im folgenden näher beschrieben.

Es zeigen:

Fig. 1 eine schematisch dargestellte Brennschneidmaschine;

Fig. 2 eine Vorder- und Seitenansicht eines Brenneraggregats nach der Erfindung.

Fig. 3 eine schematische Darstellung der Schaltungsordnung der Gaszuführung.

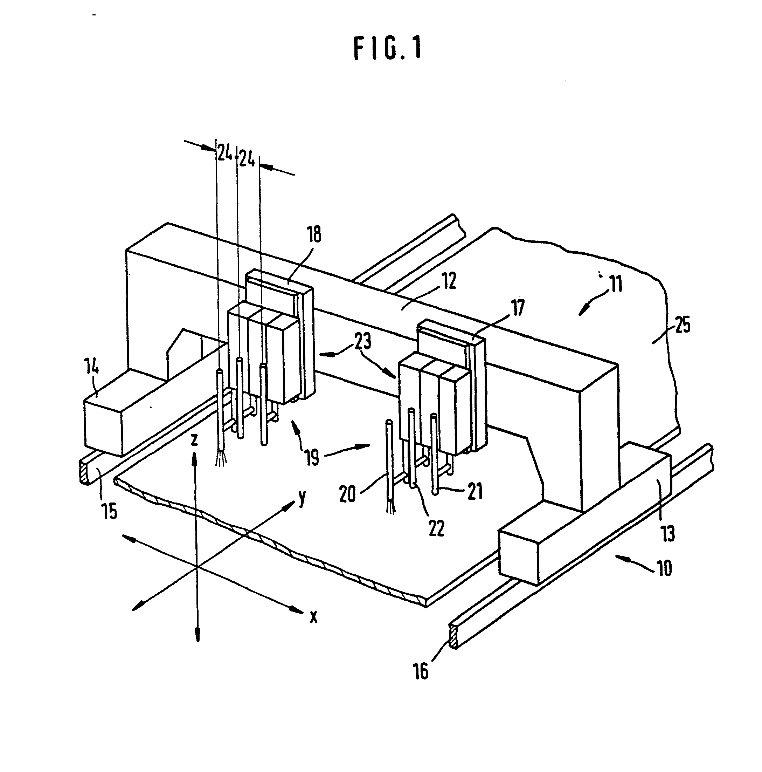

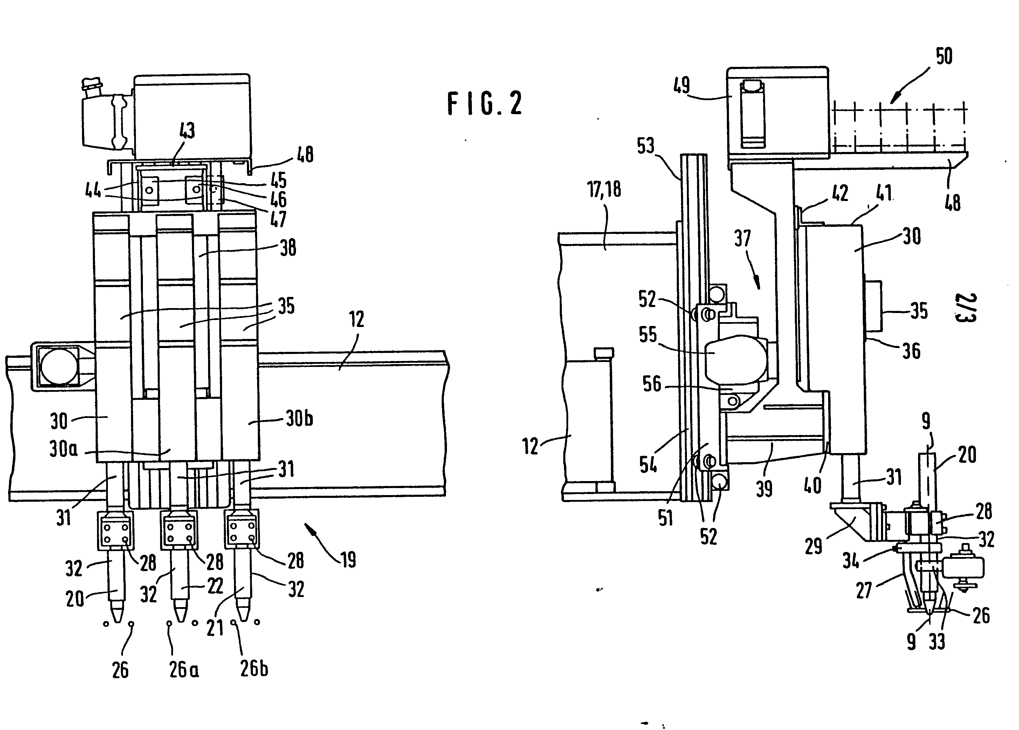

In Fig. 1 ist schematisch eine Brennschneidmaschine 10 dargestellt, die im wesentlichen aus einem Laufwagen 11, der einen Querträger 12 sowie Unterwagen 13 und 14 aufweist, besteht. Im Unterwagen 14 befinden sich die vollständigen Antriebsaggregate für die Längsbewegung (Pfeilrichtung y). Die Unterwagen 13 und 14 sind auf Laufschienen 15 und 16 in Pfeilrichtung y verfahrbar. Am Querträger 12 sind ferner Querantriebswagen 17, 18 vorgesehen. Diese Antriebswagen 17, 18 stehen mit Antriebsmotoren zum Bewegen der Wagen 17, 18 in Pfeilrichtung x in Verbindung. In der Fig. 1 sind lediglich zwei Antriebswagen 17, 18 schematisch dargestellt. Selbstverständlich ist es auch möglich, mehr als zwei bzw. nur einen Antriebswagen 17, 18 an der Brennschneidmaschine 10 anzuordnen. An den Antriebswagen 17, 18 ist je ein Brenneraggregat 19 befestigt. An dem Brenneraggregat 19 sind jeweils vorzugsweise drei Schneidbrenner 20, 21, 22 (beispielsweise Autogenschneidbrenner, Plasmaschneidbrenner oder dergl.) angeordnet, die über eine Zweifach-Hubeinrichtung 23 in Pfeilrichtung z höhenverstellbar sind. Die Schneidbrenner 20, 21, 22 sind in einem festen Abstand 24 in Reihe nebeneinander mit zum Werkstück 25 senkrechter Brennerachse 9 (Fig. 2) am Brenneraggregat 19 befestigt.

Die Schneidbrenner 20, 21, 22 werden über das auf einem nicht näher dargestellten Werkstücktisch liegende Werkstück 25 numerisch nach Lochband oder fotoelektrisch nach Unterlagen gesteuert.

In Fig. 2 ist eine Vorder- und eine Seitenansicht des Brenneraggregates 19 näher dargestellt. Zur Vereinfachung der Zeichnungen und des Verständnisses sind die Zuführungen für Heiz-, Brenn-, und Schneidgas sowie die elektrischen Zuleitungen für den Höhensensor 26, der vorzugsweise als kapazitive Höhenabtastung ausgebildet ist und die elektrischen Leitungen der Zündeinrichtung 27 nicht dargestellt.

Jeder der Einzelschneidbrenner 20, 21, 22 ist in einem als Klemmstück ausgebildeten Brennerhalter 28 befestigt, der über eine Winkelkonsole 29 mit der Kolbenstange 31 jeweils eines Pneumatikzylinders 30, 30a, 30b verbunden ist. Jede Kolbenstange 31 der Pneumatikzylinder 30, 30a, 30b ist von einem nicht näher dargestellten Faltenbalg umgeben.

Jeder Pneumatikzylinder 30, 30a, 30b ist vorzugsweise gekennzeichnet durch einen Hub von 250 mm, einer Tragkraft von 10 kg und einer hydraulischen Endlagendämpfung. Durch die Lagerung der Kolbenstange 31 in zwei Kugelbüchsen wird eine genaue und steife Führung der Schneidbrenner 20, 21, 22 erreicht. Durch die Gesamtkonzeption dieses Pneumatikzylinders 30 ist eine schwingungsfreie Aufhängung bei hoher Verfahrgeschwindigkeit der Schneidbrenner 20, 21, 22 gewährleistet.

Unterhalb der Brennerhalter 28 sind an den Brennerkörpern 32 jeweils zwei Klemmstücke 33, 34 befestigt, die als Halterung für die Zündeinrichtungen 27 und die Sensoren 26, 26a, 26b ausgebildet sind. Vorzugsweise ist jedem Schneidbrenner 20, 21, 22 ein Sensor 26, 26a, 26b und eine Zündeinrichtung 27 zugeordnet. Selbstverständlich ist es jedoch auch möglich, nur einen Sensor 26 bzw. eine Zündeinrichtung 27 pro Brenneraggregat 19 vorzusehen. Hierbei wird der jeweils zum Schneideinsatz vorgesehene Schneidbrenner 20, 21, 22 zu dem Sensor 26 bzw. der Zündeinrichtung 27 über einen Querschlitten verfahren. Eine derartige Anordnung ergibt bei einer Vielzahl von Schneidbrennern 20, 21, 22 pro Brenneraggregat 19 Kosten- und Verfahrensvorteile.

An der Vorderseite der Pneumatikzylinder 30, 30a, 30b ist auf einer Montageplatte 36 eine elektrische Einheit 35 für die Abstandskorrektur der Sensoren 26, 26a, 26b befestigt. Die Pneumatikzylinder 30, 30a, 30b sind mittels nicht näher dargestellter Zylinderschrauben an einem Support 37 angeordnet. Der Support 37 besteht vorzugsweise aus einer Schweißkonstruktion und weist ein aus einem U-Profil bestehendes Mittelteil 38 auf, das in seinem unteren, zu den Schneidbrennern 20, 21, 22 weisenden Bereich als Haltekonsole 39 ausgebildet ist. Die Haltekonsole 39 weist in ihrem zu den Pneumatikzylindern 30, 30a, 30b weisenden Bereich eine Platte 40 zur Befestigung der Pneumatikzylinder 30, 30a, 30b auf. An der den Schneidbrennern 20, 21, 22 entgegengesetzten Stirnseite 41 der Pneumatikzylinder 30, 30a, 30b werden die Pneumatikzylinder 30, 30a, 30b über jeweils einen Winkel 42 mit dem Support 37 verbunden. Der obere Teil des Supports 37 weist eine U-förmige Trageplattform 43 auf, an dessen Schenkeln 44 die elektrischen Einheiten 45, 46, 47 zur Erzeugung des Zündfunkens der Zündeinrichtungen 27 angeordnet sind. An der Oberseite der Trageplattform 43, 44 ist eine weitere Montagekonsole 48 befestigt, auf der der elektrische Verteilerkasten 49 für die Pneumatikzylinder 30, 30a, 30b und für die Steuereinrichtung 50 der Heiz-, Brenn-, und Schneidgase angeordnet ist.

Die den Pneumatikzylindern 30, 30a, 30b entgegengesetzte Seite des Supports 37 ist als Oberschlitten 51 ausgebildet und steht über Präzisionsrollenlager 52 mit der Schwalbenschwanzführung 53 des an dem Querantriebswagen 17 bzw. 18 befestigten Führungsschlitten 54 spielfrei in Verbindung. Der Support 37 wird über den Antriebsmotor 55 und ein mit dem Antriebsmotor verbundenen Übersetzungsgetriebe 56 entlang der Schwalbenschwanzführung 53 horizontal verfahren. Zu Beginn des Brennschneidens bzw. nach erfolgtem Düsenverschleiß oder nach erfolgter Werkstoff- und/oder Werkstückdickenänderung wird der jeweils für den Brennschneideinsatz vorgesehene Schneidbrenner 20, 21, 22 durch die ausfahrende Kolbenstange 31 der Pneumatikzylinder 30, 30a, 30b in eine Ausgangshöhe und anschließend mittels des Höhensensors 26 auf Arbeitshöhe über das Werkstück 25 verfahren.

Durch diese Doppel-Hubverstellung mittels der Zweifach-Hubeinrichtung 23 ist es vorteilhaft möglich, den vollständigen Arbeitsraum der Brennschneidmaschine 10 kollisionsfrei zu durchfahren.

So ist es beispielsweise beim Wasser-Plasmaschneiden möglich, den jeweils in Einsatz gebrachten Schneidbrenner 20, 21, 22 ohne Behinderung durch die restlichen nicht in Einsatz gebrachten Schneidbrenner 20, 21, 22 des Brenneraggregates 19 bis an die Begrenzungswand des Wasserbeckens heranzufahren. Durch die vollständige Ausnutzung des Arbeitsraumes wird somit die Wirtschaftlichkeit der Brennschneidmaschine 10 bei gleichzeitiger Verringerung der Kollisionsgefahr zwischen Schneidbrenner 20, 21, 22, Werkstück 25 und beispielsweise Begrenzungswand weiter erhöht. Auch wird durch die vorteilhafte Höhenverstellung jedes Einzel-Schneidbrenners 20, 21, 22 mittels der Pneumatikzylinder 30, 30a, 30b erreicht, daß keine aufwendig herzustellenden und räumlich großen Führungselemente, wie z. B. Maschinenschlitten in den Arbeitsraum hineinragen.

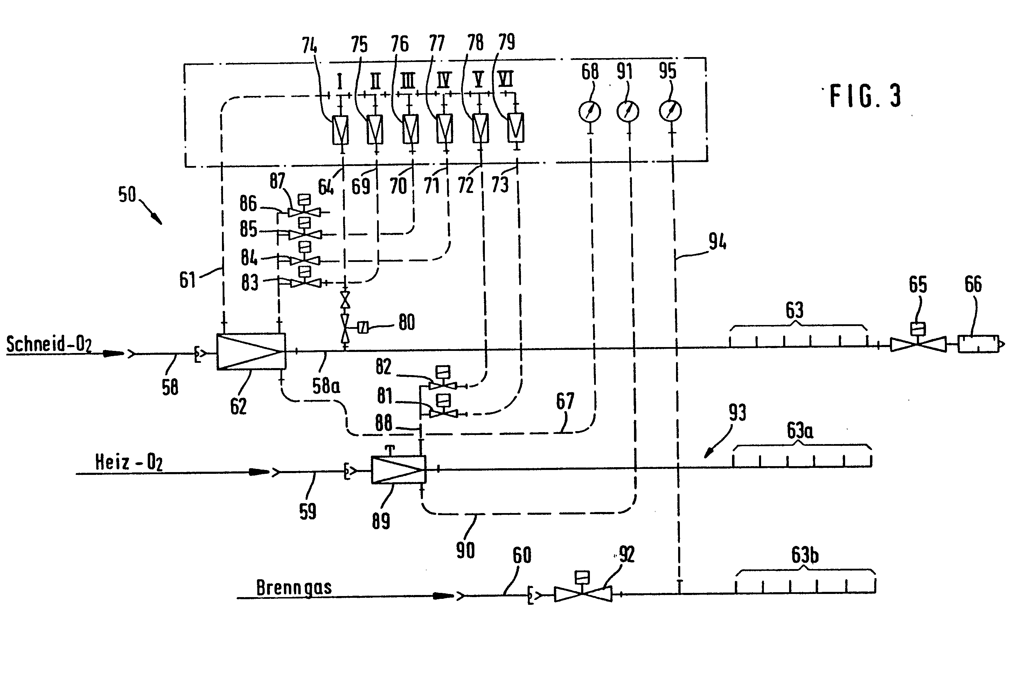

In Fig. 3 ist schematisch die Schaltungsanordnung der Steuereinrichtung 50 dargestellt. Von einer nicht näher dargestellten Versorgungsquelle geht jeweils eine Hauptleitung 58 für Schneidsauerstoff bzw. eine Hauptleitung 59 für den Heizsauerstoff bzw. eine Hauptleitung 60 für das Brenngas ab. Von der Hauptleitung 58 zweigt eine Steuerleitung 61 ab. In der Hauptleitung 58 ist ein Arbeitsdruckregler 62 angeordnet. Die Hauptleitung 58 verlängert sich in einem Leitungsteil 58a ausgehend vom Arbeitsdruckregler 62 bis zu den Anschlüssen 63, welche die Verbindung zu den Schneidbrennern 20, 21, 22 der Brennschneidmaschine 10 bilden. Zwischen den Anschlüssen 63 und dem Arbeitsdruckregler 62 ist eine Zweigleitung 64 für den Lochstechsauerstoff angeschlossen. Der Leitungsteil 58a endet in einem, in Strömungsrichtung des Gases betrachtet, hinter den Anschlüssen 63 angeordneten Entlüftungsventil 65, dem ein Schalldämpfer 66 nachgeschaltet ist.

In einem Abzweig 67 des Arbeitsdruckreglers 62 ist weiterhin ein Manometer 68 vorgesehen, welcher den jeweils im Leitungsteil 58a (Arbeitsleitung) herrschenden Arbeitsdruck anzeigt.

Wie aus der Fig. 3 ersichtlich, teilt sich die Steuerleitung 61 in sechs Zweigleitungen, 64, 69, 70, 71, 72, 73 auf. In jeder dieser Zweigleitungen 64, 69, 70, 71, 72, 73 ist eine Steuereinheit bestehend aus einem manuell einstellbaren Steuerdruckregler 74 bis 79 sowie je einem nachgeschalteten elektromagnetisch betätigbaren Steuerventil 80 bis 85 vorgesehen.

Die Zweigleitungen 69 bis 71 enden in Strömungsrichtung gesehen hinter den Steuerventilen 83 bis 85 in einer Querleitung 86, die mit ihrem einen Ende auf der Steuerseite des Arbeitsdruckreglers 62 in diesem einmündet. Am anderen Ende der Querleitung 86 ist ein zweites Entlüftungsventil 87 vorgesehen.

In der Zweigleitung 64, die hinter dem Arbeitsdruckregler 62 in den Leitungsteil 58a mündet, ist hinter dem Steuerventil 80 zusätzlich eine Rückströmsicherung vorgesehen.

Die Zweigleitungen 72 und 73 enden in Strömungsrichtung gesehen hinter den Steuerventilen 81 und 82 in einer Querleitung 88, die mit ihrem einen Ende auf der Steuerseite des Arbeitsdruckreglers 89 in diesen einmünden. Der Arbeitsdruckregler 89 ist an eine Versorgungsquelle für den Heizsauerstoff angeschlossen. Von dem Arbeitsdruckregler 89 für die Heizsauerstoffzufuhr geht ebenfalls ein Abzweig 90 zu einem Manometer 91, welcher den jeweils in der Arbeitsleitung herrschenden Arbeitsdruck anzeigt.

Weiterhin ist in der Fig. 3 die an eine Versorgungsstelle angeschlossene Hauptleitung 60 für die Zufuhr des Brenngases dargestellt. In der Hauptleitung 60 ist ebenfalls ein Steuerventil 92 zur Druckeinstellung vorgesehen. Am Ende der Hauptleitungen 59, 60 sind ebenfalls die Anschlüsse 63a und 63b schematisch dargestellt. Hinter dem Steuerventil 92 ist weiterhin in der Hauptleitung 60 für das Brenngas ein Abzweig 94 vorgesehen, der mit einem Manometer 95 zur Arbeitsdruckanzeige verbunden ist.

Die in jeder Zweigleitung 64, 69, 70, 71, 72, 73 vorhandene Steuereinheit, die jeweils aus dem Steuerdruckregler und dem Steuerventil gebildet wird, stellt jeweils eine Druckstufe I, II, III, IV, V, VI von unterschiedlicher Größe dar. Im Betrieb der Steuereinrichtung 50 ist beim Anschluß von drei Schneidbrennern 20, 21, 22 mit unterschiedlicher Gasdurchsatzgeometrie immer nur eine der drei Druckstufen II, III, IV geöffnet.

Zu Beginn des Brennschneidens wird zuerst die Druckstufe I geschaltet. Dadurch gelangt zunächst Sauerstoff in einem für das Lochstechen erforderlichen Druck durch den Leitungsteil 58a zu einem der Schneidbrenner 20, 21, 22. Anstelle des Lochstechens, d. h. der Anschnitt erfolgt innerhalb des Werkstückes, ist es auch selbstverständlich möglich, die Druckstufe I zum Anschneiden des Werkstückes an seiner Kante zu verwenden.

Nachdem der Durchstich bzw. das Anschneiden erfolgt ist, schaltet die Steuereinheit 75, 83 (Druckstufe II) oder die Steuereinheit 76, 85 (Druckstufe III) oder die Steuereinheit 77, 84 (Druckstufe IV) ein. Dabei dienen die Druckstufen II bis IV zur Einstellung des entsprechenden Schneidsauerstoffs für die Schneidbrenner 20, 21, 22 mit unterschiedlicher Gasdurchsatzgeometrie. Sind an dem Brenneraggregat 19 Schneidbrenner 20, 21, 22 mit gleicher Gasdurchsatzgeometrie angeordnet, ist selbstverständlich nur eine Druckstufe II, III, oder IV erforderlich. Es hat sich bei der Verwendung der Schneidbrenner 20, 21, 22 mit unterschiedlicher Gasdurchsatzgeometrie gezeigt, daß lediglich eine Heizsauerstoffsteuereinheit 93 diesen Schneidbrennern 20, 21, 22 zugeordnet werden muß. Mit dieser Heizsauerstoffeinheit 93 wird den Schneidbrennern 20, 21, 22 während der Anheizzeit des Werkstückes 25 der Heizsauerstoff mit höherem (Druckstufe VI) und nach Erreichen der Zündtemperatur mit normalem (geringerem) Druck (Druckstufe V) zugeführt.

**Ausführungsbeispiel:**

Eine Brennschneidmaschine 10, wie sie z. B. von der Anmelderin z. B. unter dem Namen Omnimat oder Sicomat vertrieben wird, wurde mit einem Brenneraggregat 19, an dem drei Schneidbrenner 20, 21, 22 mit senkrechter Brennerachse 9 und unterschiedlicher Gasdurchsatzgeometrie angeordnet sind,ausgerüstet. Der Schneidbrenner 20 wurde mit einer Schneiddüse 6 - 10 mm, der Schneidbrenner 21 mit einer Schneiddüse 10 - 25 mm und der Schneidbrenner 22 mit einer Schneiddüse 25 - 50 mm bestückt.

An den Druckstufen wurden Gasdrücke eingestellt, wie sie für die unterschiedlichen Düsen in der Praxis aus Tabellen bekannt sind.

Auf den Werkstücktisch der Brennschneidmaschine wurden Werkstücke 25, 25', 25'' mit einer Dicke von 8 mm, 20 mm und 30 mm angeordnet. Mit dem Schneidbrenner 20 wurden zuerst aus dem Werkstück 25 mit der Dicke von 8 mm Formteile ausgeschnitten. Anschließend wurde über die numerische Steuerung der Brennschneidmaschine 10 der Referenzpunkt um den Brennerabstand 24 automatisch verschoben und somit der Schneidbrenner 21 mit der anderen Schneiddüse in Einsatz gebracht. Mit diesem Schneidbrenner 21 wurden aus dem Werkstück 25' mit der Dicke 20 mm weitere Formteile ausgeschnitten, ohne daß hierzu ein Umrüsten der Brennschneidmaschine erforderlich war.

Ist das Brenneraggregat 19 mit drei Schneidbrennern 20, 21, 22 mit gleicher Gasdurchsatzgeometrie ausgerüstet, beispielsweise jeder Schneidbrenner 20, 21, 22 mit der Schneiddüse mit 10 - 25 mm, so wird bei Düsenverschließ eines Schneidbrenners 20, 21, 22 von der numerischen Steuerung ein anderer Schneidbrenner 20, 21, 22 mit einem neuen Düsensatz in Eingriff gebracht.

**Patentansprüche**

1. Brennschneidmaschine zum Schneiden von Werkstücken (25), wie Blechtafeln, Metallplatten und dgl., mit mindestens einem Brenneraggregat (19) zur Halterung von mehreren verstellbar angeordneten Einzel-Schneibrennern (20, 21, 22) mit zum Werkstück (25) senkrechten Brennerachsen (9) und einer Einrichtung zur Zuführung von Brenn-, Heiz- und/oder Schneidgasen, gekennzeichnet durch einen automatisch von einer NC-Steuerung steuerbaren Wechsel der nacheinander für den Arbeitseinsatz benötigten und in festem Brennerabstand (24) zueinander auf dem Brenneraggregat (19) angeordneten Einzel-Schneidbrenner (20, 21, 22) über eine Verschiebung des Brennerabstandes (24) und ein Verstellen deseinen in den Arbeitseinsatz zu bringenden Einzel-Schneidbrenners (20) auf eine Arbeitshöhe über dem Werkstück (25) während die jeweils weiteren Einzel-Schneidbrenner (21, 22) des Brenneraggregates (19) nicht in den Arbeitseinsatz gebracht werden können.

2. Brennschneidmaschine nach Anspruch 1, dadurch gekennzeichnet, daß die Einzel-Schneidbrenner (20, 21, 22) eine unterschiedliche Gasdurchsatzgeometrie oder eine gleiche Gasdurchsatzgeometrie aufweisen.

3. Brennschneidmaschine nach Anspruch 1 oder 2, dadurch gekennzeichnet, daß die Schneidbrenner (20, 21, 22) in Reihe nebeneinander angeordnet sind.

4. Brennschneidmaschine nach Anspruch 1 oder 2, dadurch gekennzeichnet, daß die Schneidbrenner (20, 21, 22) auf einem Kreis nebeneinander angeordnet sind.

5. Brennschneidmaschine nach einem der Ansprüche 1 bis 4, dadurch gekennzeichnet, daß jedem Schneidbrenner (20, 21, 22) ein Sensor (26, 26a, 26b) zur Ermittlung und Konstanthaltung der Arbeitshöhe zugeordnet ist.

6. Brennschneidmaschine nach einem der Ansprüche 1 bis 5, dadurch gekennzeichnet, daß jedem Schneidbrenner (20, 21, 22) eine Zündeinrichtung (27) zugeordnet ist.

7. Brennschneidmaschine nach einem der Ansprüche 1 bis 6,

dadurch gekennzeichnet,
daß die Schneidbrenner (20, 21, 22) an einer Zweifach-Hubeinrichtung (23) befestigt sind.

8. Brennschneidmaschine nach Anspruch 7, dadurch gekennzeichnet,
daß jeder Schneidbrenner an einem separaten Pneumatikzylinder (30, 30a, 30b) befestigt ist und die Pneumatikzylinder (30, 30a, 30b) an einem Support (37) höhenverstellbar angeordnet sind.

9. Brennschneidmaschine nach einem der Ansprüche 1 bis 8,
dadurch gekennzeichnet,
daß allen Schneidbrennern (20, 21, 22) eine gemeinsame Heizauerstoffsteuereinheit (93) zugeordnet ist, mit der während der Anheizzeit des Werkstoffs den Schneidbrennern (20, 21, 22) der Heizsauerstoff mit höherem und nach Erreichen der Zündtemperatur mit normalem (geringem) Druck zuführbar ist.

10. Brennschneidmaschine nach Anspruch 1, dadurch gekennzeichnet,
daß jedem Schneidbrenner (20, 21, 22) eine gesonderte Schneidsauerstoffsteuereinheit (75, 83; 76, 4; 77, 85) zugeordnet ist, mit der ein der Gasdurchsatzgeometrie der Schneidbrenner (20, 21, 22) angepaßter Schneidsauerstoffdruck zuschaltbar ist.

## Claims

1. Flame cutting machine for the cutting of workpieces (25), such as sheet metal panels, metal plates and the like, having at least one torch unit (19) for the holding of a plurality of adjustably arranged individual cutting torches (20, 21, 22) with torch axes (9) perpendicular to the workpiece (25), and a device for the supply of combustion, heating and/or cutting gases, characterized by a change, which can be controlled automatically by a numerical control, of the individual cutting torches (20, 21, 22), successively required for working use and arranged in fixed torch spacing (24) with respect to one another on the torch unit (19), by means of a displacement of the torch spacing (24) and an adjustment of the one individual cutting torch (20) to be brought into working use to a working height above the workpiece (25), while what are in this case the other individual cutting torches (21, 22) of the torch unit (19) cannot be brought into working use.

2. Flame cutting machine according to Claim 1, characterized in that the individual cutting torches (20, 21, 22) have a different gas throughput geometry or an identical gas throughput geometry.

3. Flame cutting machine according to claim 1 or 2, characterized in that the cutting torches (20, 21, 22) are arranged in series next to one another.

4. Flame cutting machine according to claim 1 or 2, characterized in that the cutting torches (20, 21, 22) are arranged in a circle next to another.

5. Flame cutting machine according to one of claims 1 to 4, characterized in that each cutting torch (20, 21, 22) is assigned a sensor (26, 26a, 26b) for determining and keeping constant the working height.

6. Flame cutting machine according to one of claims 1 to 5, characterized in that each cutting torch (20, 21, 22) is assigned an igniting device (27).

7. Flame cutting machine according to one of claims 1 to 6, characterized in that the cutting torches (20, 21, 22) are fastened on a twin lifting device (23).

8. Flame cutting machine according to Claim 7, characterized in that each cutting torch is fastened on a separate pneumatic cylinder (30, 30a, 30b) and the pneumatic cylinders (30, 30a, 30b) are arranged vertically adjustably on a slide rest (37)

9. Flame cutting machine according to one of claims 1 to 8, characterized in that all cutting torches (20, 21, 22) are assigned a joint heating oxygen control unit (93), with which the cutting torches (20, 21, 22) can be supplied during the heating-up period of the material with heating oxygen at higher pressure and, after reaching the ignition temperature, can be supplied with heating oxygen at normal (low) pressure.

10. Flame cutting machine according to Claim 1, characterized in that each cutting torch (20, 21, 22) is assigned a separate cutting oxygen control unit (75, 83; 76, 4; 77, 85), with which a cutting oxygen pressure adapted to the gas throughput geometry of the cutting torches (20, 21, 22) can be cut in.

## Revendications

1. Machine d'oxycoupage pour découper des pièces (25) telles que des plaques de tôle, des plaques métalliques ou analogues, comportant au moins un ensemble a chalumeaux (19) portant plusieurs chalumeaux d'oxycoupage (20, 21, 22) séparément réglables, l'axe de chalumeau (9) étant perpendiculaire à la pièce (25), ainsi qu'une installation pour assurer l'alimentation en gaz de combustion de chauffage et/ou d'oxycoupage, machine caractérisée par un changement automatique susceptible d'être mis en oeuvre par une commande numérique des différents chalumeaux d'oxycoupage (20, 21) nécessaires successivement pour effectuer le travail, chalumeaux qui sont portés par un ensemble à chalumeaux (19) avec un intervalle fixe (24) entre les chalumeaux, par décalage de la l'intervalle (24) des chalumeaux et réglage de celui des chalumeaux (20) à mettre en position de travail, à une hauteur de travail au-dessus de la pièce (25) pendant que les autres différents chalumeaux d'oxycoupage (21, 22) de l'ensemble (19) ne sont pas mis en oeuvre.

2. Machine d'oxycoupage selon la revendication 1, caractérisée en ce que les différents chalumeaux (20, 21, 22) ont une géométrie de débit de gaz différente ou une même géométrie de débit de gaz.

3. Machine d'oxycoupage selon la revendication 1 ou 2, caractérisée en ce que les chalumeaux d'oxycoupage (20, 21, 22) sont placés en rangées.

4. Machine d'oxycoupage selon la revendication 1 ou 2, caractérisée en ce que les chalumeaux d'oxycoupage (20, 21, 22) sont répartis suivant un cercle.

5. Machine d'oxycoupage selon l'une des revendications 1 à 4, caractérisée en ce qu'à chaque chalumeau d'oxycoupage (20, 21, 22) est associé un capteur (26, 26a, 26b) pour déterminer la hauteur de travail et maintenir celle-ci constante.

6. Machine d'oxycoupage selon l'une des revendications 1 à 5, caractérisée en ce qu'à chaque chalumeau (20, 21, 22) est associé un dispositif d'allumage (27).

7. Machine d'oxycoupage selon l'une des revendications 1 à 6, caractérisée en ce que les chalumeaux d'oxycoupage (20, 21, 22) sont fixés sur une installation de levage double (23).

8. Machine d'oxycoupage selon la revendication 7, caractérisée en ce que chaque chalumeau d'oxycoupage est fixé sur un vérin pneumatique distinct (30, 30a, 30b) et les vérins pneumatiques (30, 30a, 30b) sont montés réglables en hauteur sur un support (37).

9. Machine d'oxycoupage selon l'une des revendications 1 à 8, caractérisée en ce que tous les chalumeaux d'oxycoupage (20, 21, 22) sont reliés à une unité de commande d'oxygène de chauffage (93) commune qui alimente les chalumeaux d'oxycoupage (20, 21, 22) avec de l'oxygène de chauffage à une pression plus élevée pendant la phase de chauffage de la pièce et lorsqu' on atteint la température d'allumage cette unité fournit l'oxygène à une pression normale (faible).

10. Machine d'oxycoupage selon la revendication 1, caractérisée en ce qu'à chaque chalumeau d'oxycoupage (20, 21, 22) est associée une unité de commande d'oxygène de coupage (75, 83; 76, 84; 77, 85) particulière qui permet d'établir une pression d'oxygène de coupage adaptée à la géométrie de débit de gaz du chalumeau d'oxycoupage (20, 21, 22).

# FIG.1

FIG. 2

2/3

EP 0 171 701 B1

FIG. 3

EP 0 171 701 B1